# EUROPEAN PATENT SPECIFICATION

(11) **EP 3 128 630 B1**
(45) Date of publication and mention of the grant of the patent: **21.02.2024**
(21) Application number: 15306263.3
(22) Date of filing: 04.08.2015
(51) Int. Cl.: H02G 9/02, H02G 15/188, H02G 15/105, H02G 15/14

(54) **METHOD FOR ELECTRICAL SEPARATION OF THE METALLIC SHEATH A HVDC MI CABLE**
VERFAHREN ZUR ELEKTRISCHEN TRENNUNG DER METALLISCHEN UMMANTELUNG EINES HVDC-MI-KABELS
PROCÉDÉ POUR LA SÉPARATION ÉLECTRIQUE DE LA GAINE MÉTALLIQUE D'UN CÂBLE MI HVDC

(43) Date of publication of application: 08.02.2017
(73) Proprietor: Nexans, 92400 Courbevoie (FR)
(72) Inventor: ABRAHAMSEN, Roar, 1724 Sarpsborg (NO); NIELSEN, Gard, 1726 Sarpsborg (NO); JOHANSEN, Ben Kristian, 1779 Halden (NO)
(74) Representative: Ipsilon

(56) References cited:
- EP-A2- 0 312 424
- EP-A2- 0 496 253
- WO-A1-98/08104
- WO-A1-2012/116712
- WO-A1-2013/075756
- DE-A1- 3 437 481
- GB-A- 898 762
- JP-A- H08 195 129
- Anonymous: "Câble électrique à haute tension - Wikipédia", , 1 May 2015 (2015-05-01), XP055566326, Retrieved from the Internet: URL:https://fr.wikipedia.org/w/index.php?t itle=Câble_électrique_à_haute_tension&oldi d=114643299 [retrieved on 2019-03-08]

## Description

The present invention relates to a method of electrically separating at least a metallic sheath and an outer semi-conductor of a high voltage mass impregnated direct current (HVDC MI) cable. The application also relates to a HVDC MI cable comprising as least one longitudinal segment with electrically separated outer layers.

Electric power transmission is the bulk transfer of electrical energy, from generating power plants to electrical substations near demand centers. This is distinct from the local wiring between high-voltage substations and customers, which is typically referred to as electric power distribution. Transmission lines, when interconnected with each other, become transmission networks.

Most transmission lines are high-voltage three-phase alternating current (AC), although single phase AC is sometimes used in railway electrification systems. High-voltage direct-current (HVDC) technology is used for greater efficiency at very long distances (typically hundreds of kilometers), or in submarine power cables (typically longer than 50 kilometers). When electrical energy is to be transmitted over very long distances, the power lost in AC transmission becomes appreciable and it is less expensive to use direct current (DC) instead of alternating current (AC). HVDC links are also used to stabilize and control problems in large power distribution networks where sudden new loads and blackouts in one part of a network can otherwise result in synchronization problems and cascading failures.

Since the 1950s, HVDC mass impregnated (MI) cables have been used in large submarine power transmission projects at the highest DC voltage levels. MI cables are rated up to 525 kilovolts (kV) DC, and are currently the only option at this voltage level.

State-of-the-art MI cables technology has a long, established history and an excellent track record of superior reliability. MI cables can transmit voltages of up to 1,000 MW per cable with low losses in a 500 kV DC system, equivalent to 2,000 MW in a bipolar operation.

The central conductor of a typical submarine MI cable can be made of copper or aluminum. Conductor size can be any value up to 2,500 mm² and is not limited to the usual cross-section steps. Insulation consists of super clean paper impregnated with a high viscosity compound based on mineral oil. It is safely confined in an extruded lead-alloy sheath, which is normally reinforced with a polymeric and steel enclosure. Submarine MI cables can further be protected by an armor of steel wires, which can be designed to meet all types of protection requirements. For improved corrosion protection, the armoring wires and the outer serving can be soaked with bitumen.

MI cables contain no free oil and are environmentally friendly because in the event of a severe mechanical damage such as rupture, no liquids or gases are released. The electric field around a MI cable is zero even under the most stringent operational conditions because of the metallic sheath. The magnetic field is around the same magnitude as the natural geomagnetic field, and two to three orders of magnitude below the limit values defined by the ICNIRP (International Commission on Non-Ionizing Radiation Protection) for human exposure. Since HVDC cables are usually installed in pairs with counter directional current, the resulting magnetic field is reduced further still. At the end of the product life cycle, the cable may be recovered and recycled.

A challenge for the HVDC MI cable when they extend over long distances is that it is difficult to locate the position of a fault when this occurs in the cable system. Hence, there is a need for a method and a system to easily and cost effective, detect in which part of the cable a failure occurs.

WO2012/116712 discloses a method for joining two HVDC MI cables. The method includes removing at least one protecting layer and the outer semiconducting layer at the cable ends and insulating the joint with impregnated paper. This prior art discloses a jointing technique for jointing to cable ends and does not solve the problem of locating a failure in a HVDC MI cable.

WO2012/116712A1 relates to a joint for HV cables insulated with impregnated paper or paper- polypropylene laminate.

WO2013/075756A1 relates to a direct current transmission system comprising a thickness controlled laminated insulation layer and method of manufacturing.

WO98/08104A1 relates to a cable fault monitoring system.

DE3437481A1 discloses a method and transition sleeve for testing the cable jacket of a plastic cable connected to a paper-insulated cable.

EP0496253A2 discloses a process for cyclical crossbonding of cable sheaths.

EP0312424A2 relates to a cable installation method.

GB898762A discloses improvments in or relating to casings for joints in single-core metal-sheathed electric power cables.

JPH08195129 relates to a high-voltage cable having improved reliability and workability.

An object of the invention is to provide a method and apparatus in order to ease the fault finding if a failure occurs in a HVDC MI cable.

Another object of the invention is to provide a method and apparatus being able to test different sections of an underground cable system.

Another object of the invention is to provide a method and a cable which allows for separate grounding of the sheath near the transition between land and subsea installation.

Another object of the invention is to provide a method and cable applicable for HVDC MI Internal Return Conductor (IRC), IRC cable where transmission capacity and thermal conditions limits the possibility of using IRC on land sections and the IRC thereby has to be separated into two separate cables.

Yet another object of the invention is to provide a method and apparatus applicable where sections of an existing IRC cable system being replaced by two separate cables (HVDC MI cable and low volt, LV return cable).

In the present application, the term "electrically separating" a layer of a cable means providing a gap or an interruption in the layer in the longitudinal direction of the cable such that sub-sections or segments of the layer is formed on either side of the gap, where sub-sections or segments are electrically isolated from each other. In other words, "electrically separating" a layer implies forming an electrical separation or gap in the layer.

In the present application, the term "outer screen" of a cable is referred to the layers of a HVDC MI cable, which comprises the metallic sheath and the outer semi-conductor layer.

A goal of the invention is to provide a method and a cable for handling different electrical potentials in the outer screen of HVDC MI cables for testing sections of the cable system or in the HVDC MI IRC cables for separating out the return cable. The problem is solved by electrical separate at least one metallic sheath and an outer semi- conductor layer of a HVDC MI cable, providing adequate insulation thickness, and optionally connecting a connector for a low volt (LV) cable to the at least one metal sheath.

The invention is as defined in independent method claim 1 and independent device claim 7.

The method can also comprise providing said metallic flanges with electric connection elements. This aspect allows for connection of the two sides to ground, or one side to ground and the opposite side to a voltage potential, or one side to ground and the opposite side to a separate conductor, or one side to one separate conductor and the opposite side to another separate conductor, or one side to one voltage potential and the opposite side to another voltage potential.

The tape for the at least one insulation tape layer, and optionally the further insulating tape layer is an impregnated insulation paper and the tape for the at least one semi-conducting tape layer is an impregnated semi-conductive paper.

The radial thickness of the insulation tape layer within the overlap section has adequate insulation thickness calculated to the maximum electrical stress of the semi-conducting tape layers and semi-conducting layer in the overlap section. In a preferred embodiment according to the invention, the first insulating tape is an impregnated insulation paper and the semi-conducting tape is an impregnated semi-conductive paper.

The outside surface shape of the further insulation layer along the separated longitudinal segment of the cable, has advantageous a plane and smooth surface for applying an insulator mantle. The insulator mantle is pulled tight onto the outside surface of the insulation paper. The insulator mantle is made of a dielectric material, such as porcelain, polyoxymethylene (POM), Epoxy, polyvinylidene fluoride (PVDF), etc. The insulator mantle is arranged around the circumference of the cable overlapping at least the longitudinal segment being separated and secured to the cable by connecting metallic flanges to the metallic sheath on each side of the insulator mantle preferably by soldering. The metallic flanges are also connected to the insulator mantle preferably by molding or other mechanical connections. In one aspect of the invention the separation segment is provided with a conic taper and the internal through whole of the insulator mantle is provided with a similar taper to allow for the smooth internal fit between the outer surface of the segment and the internal through whole of the insulator mantle.

As described in prior art, an HVDC MI cable can extend over long distances, and it is difficult to locate the position when a fault occurs in the cable. By separating the outer screen including the metal sheet, according to the present invention, a certain length of cable can be divided into sections for individual testing purposes. Each section can be tested separately, section by section, from the cable end. In a soil or land based cable system, and by separating the outer screen of the HVDC cable, the main insulation of the HVDC cable may be tested either by impulses or steady state voltage. The amplitude of test voltages is dependent on the design of the gap between the separated layers. Theoretically, 1mm can withstand 100kv 1.2 / 50µs surge.

The invention can be designed to maintain a continuous outer screen all along the cable length during normal operation and that, in a fault finding situation, the outer screen can be separated at a desired section. Further, according to the invention, the metallic flanges on each side of the insulator mantle, are provided with electric connection units. The purpose is to connect the two sides to ground, or one side to ground and the opposite side to a voltage potential, or one side to ground and the opposite side to a separate conductor, or one side to one separate conductor and the opposite side to another separate conductor, or one side to one voltage potential and the opposite side to another voltage potential. In this way, even when the HVDC MI cable has a separated outer screen, the cable can maintain a continuous outer screen all along the cable length during normal operation, and in the case of a fault finding situation, the metallic flanges can be connected or reconnected for the intended purpose.

Further, at least one of the metallic flanges, which are arranged on each side of the insulator mantle, is provided with an impregnation fluid inlet for providing impregnation fluid to the tape layers. The insulator may be pressurized by an external oil reservoir if necessary or fully self contained by the cable impregnation compound itself. The insulator may be fitted with connectors for Internal Return Conductor (IRC) and separate Low Volt return cable or ground cables to Earth Link Boxes.

According to the invention the semi-conducting tape layer is separated from the outer semi-conducting layer in an overlap section, or separated from an extension of outer semi-conductive layer in an overlap section with adequate insulation thickness (gap) calculated to the maximum electrical stress of the semi-conducting tape layers. The insulating gap between the semi-conductive layers must withstand the maximum electrical stress caused by propagated atmospheric or operating impulses. Typically lightning and switching impulses may induce a sheath current in which will create a rise in potential over the insulated gap. The design of the insulated gap must be calculated to withstand such increase in potential.

As described above, the present invention provides a method that makes it possible to divide a HVDC MI cable into individual sections for testing purposes. Each cable section is during normal operation connected to the next section. In a fault finding situation (in the main insulation) a test equipment (known to the skilled person in the art) is typically connected to the cable termination at one end for testing the whole length of the cable. By implementing the cable according to the present invention in an underground cable length, the sectioning of the cable length can be done stepwise from the remote apparatus and toward the cable termination in which the test equipment is connected. By reconnection of each individual section, one by one, backwards to the testing equipment, the faulty section can be found by elimination method.

Testing of an insulating oversheet can be performed locally at each separated longitudinal segment. Each separated longitudinal segment, according to the invention, can be located at desired locations along the cable route. The number of separated longitudinal segments along the cable route is not technically limited by any means. One or more separation segments in a cable according to the present invention can typically be located in connection with an underground cable joint and thereby the sections are given by the cable route and sub sections of the installation of a cable system.

The electrically separated longitudinal segment of a HVDC MI cable, according to the invention can be installed in connection with a submarine/underground cable joint. The method can then be used to separate the outer screen between a submarine cable and an underground cable in which make it possible to test the underground cable section separately. By this means it can be determined whether a fault is present in the submarine cable or the underground cable by elimination. The amplitude of test voltages is dependent on the design of the gap between the screens. The cable also makes it possible to perform routine testing of an insulation oversheet where a semi-conductive sheet of an underground cable section is connected to a semi-conductive sheet in a submarine cable section. By disconnecting the outer screen of the submarine cable section from the underground section the insulating oversheet can be routine tested by voltage amplitude dependent on the design of the gap between the outer screens.

The invention also discloses a HVDC MI cable according to claim 7.

The insulation tape layer can be made of an impregnated insulation paper and the at least one semi-conducting tape layer can be made of an impregnated semi-conductive paper.

The radial thickness of the at least one insulation tape layer radially separating the semi-conductor ends within the overlap is advantageously an adequate insulation thickness calculated to the maximum electrical stress of the semi-conducting layers.

The cable can maintain a continuous outer screen all along the cable length during normal operation, and in the case of a fault finding situation, any electrical current in the metallic sheath can be measured separately on each side of the longitudinal segment.

In an embodiment of the invention, the outer semi-conducting layer at the first position is not extended, but the outer semi-conducting layer at the second position is extended. Wherein, the extended outer semi-conducting layer in form of the second semi-conductive tape layer is overlapping the outer semi-conducting layer at the first position by a predetermined length F1. Bringing the second semi-conducting tape layer into electrical contact with the outer semi-conductor layer at the second position, and bringing the second semi-conducting tape layer electrically isolated from but overlapping the outer semi-conductor layer at the first position.

In another embodiment, both the outer semi-conducting layer at the first position and the second position are extended towards each other and overlapping each other by a predetermined length F1. Bringing the first semi-conducting tape layer into electrical contact with the outer semi-conductor layer at the first position, and bringing the second semi-conducting tape layer into electrical contact with the outer semi-conductor layer at the second position, and bringing the first and second semi-conducting tape layer electrically isolated from each other, but overlapping one another by a length F1.

In other words, the invention discloses a HVDC MI cable with an electrically separated longitudinal section of at least a metallic sheath and an outer semi-conductor layer.

Further, an insulator mantle, in form of an Epoxy insulator mantle, or made from any other dielectric material such as porcelain, POM, PVDF,etc., is arranged around the circumference of the cable overlapping at least the segment being separated and secured to the cable by soldering metallic flanges to the metallic sheath on each side of the insulator mantle.

According to an embodiment, the metallic flanges are provided with electric connection units. Further, at least one of the flanges is provided with an impregnation fluid inlet for providing impregnation fluid to the wrapped layers. After connecting the insulator to the metallic sheath at each side the insulator may be filled with impregnation fluid to remove any residual air inside the insulator.

According to the invention, the insulating gap between the semi-conductive layers must withstand the maximum electrical stress caused by propagated atmospheric or operating impulses. Typically lightning and switching impulses may induce a sheath current in which will create a rise in potential over the insulated gap. The design of the insulated gap must be calculated to withstand such increase in potential.

In order to be able to handle different electrical potentials in the outer screen of HVDC MI cables, it is necessary to electrically separate the metallic sheath and the outer semi-conductor of the HVDC MI cable. Separation of the outer screen can be used in the following applications:
- HVDC MI underground cable systems where High Voltage (HV) testing of different cable sections is demanded.
- HVDC MI Internal Return Conductor (IRC) cable design where the IRC has to be separated into a separate Low Voltage (LV) return cable and a HVDC MI underground cable.
- HVDC MI IRC cable design where parts of the IRC are to be replaced by a separate LV return cable.
The advantages of the invention is that the present invention offer flexibility with regards to the following:
- Ease the fault fining and be able to test individual sections of an underground cable system in case of a fault occurs in the cable system. By use of this invention in connection with a transition joint between submarine cable and an underground cable, the user can easily determine whether a fault is present in the land section or the submarine section of the cable system by disconnecting the outer screen and test the sections separately.
- The invention is applicable for HVDC MI IRC cable where the transmission capacity and thermal conditions limits the possibility for using IRC on land sections and the IRC has to be separated into two separate cables.
- Further, the invention is applicable where sections of an excisting IRC cable system shall be replaced by two separate cables (HVDC MI cable and LV return cable).

The description above, as well as further objects, features and advantages of the present invention will be more fully appreciated by reference to the following detailed description of the preferred embodiment which should be read in conjunction with the accompanying drawings in which:
Fig. 1 - shows a sectional view of the HVDC MI cable with different layers.
Fig. 2 - shows a sectional view of the separated longitudinal segment of the HVDC MI cable.
Fig. 3 - shows a sectional view of an embodiment according to the invention where there is no extension at the first position of the outer semi-conducting layer.
Fig. 4 - shows a sectional view of another embodiment according to the invention where there is an extension at the first position of the outer semi-conducting layer, Z > 0.

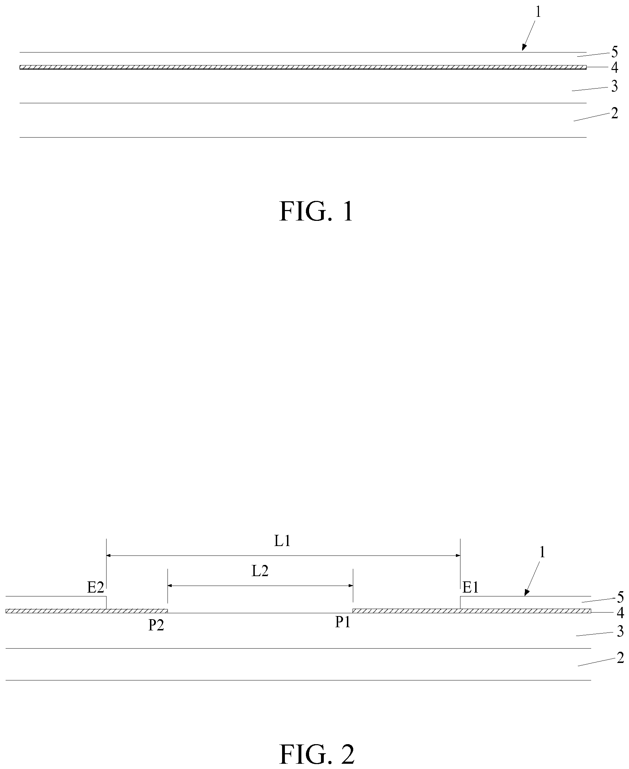

Figure 1 shows the upper half portion of a HVDC MI cable seen from a sectional view. The HVDC MI cable 1 comprises several layers that are overlaid or wrapped over each other. The HVDC MI cable 1 comprising from the centre of the cable: at least one conductor 2, at least one mass impregnated insulation layer 3, an outer semi-conductor layer 4 and at least one metallic sheath 5.

Figure 2 shows a sectional view of the separated longitudinal segment L 1 of the HVDC MI cable 1. The HVDC MI cable 1 has an electrically separated longitudinal segment of at least a metallic sheath 5 and an outer semi-conductor layer 4. The separated longitudinal segment comprises a first section L1 with a first E1and a second E2 annular edge of the at least one metallic sheath 5. A second section L2 located within the first section L1 with a first and a second position P 1, P2 of the at least one outer semi-conducting layer. As seen on Figure 2, the at least one mass impregnated insulation layer 3 and the at least one conductor layer 2 are not separated in the longitudinal direction.

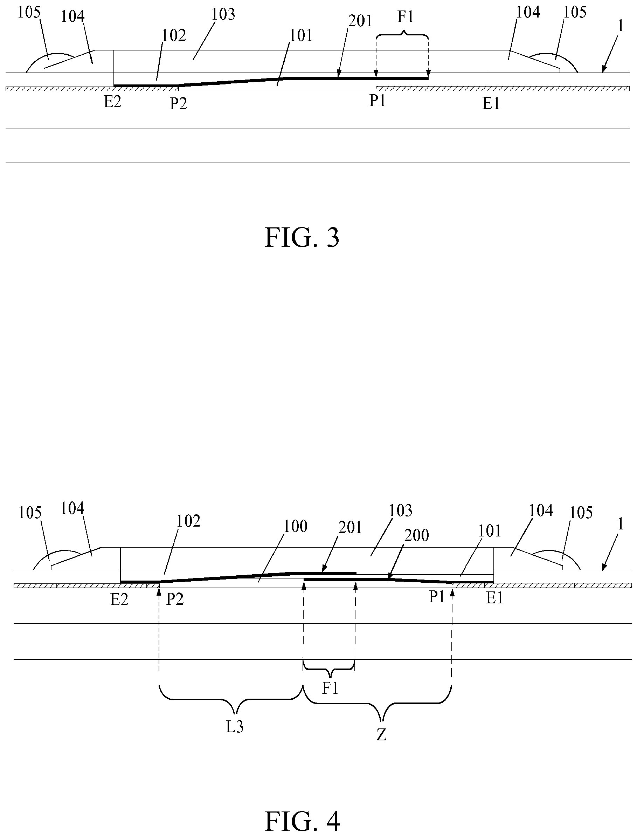

Figure 3 shows a shows a sectional view of the HVDC MI cable 1 with two insulating tape layers 101 and 102 and one semi-conducting tape layer 201. The outer semi-conductor layer 4 at the first position P1 has no extension. In that Z = 0. An insulating tape layer 101 is wrapped onto the second section L2 (defined on figure 2) and overlapping the outer semi-conductor layer 4 at the first position P1 and further to the first annular edge E1. As seen in Fig. 3, the insulating tape layer 101 as an increasing diameter from the second position P2 towards the first position P1. A semi-conducting tape layer 201 is wrapped onto the surface of the insulating tape layer 101 from the second position P2 towards and overlapping the first position P1 by a predetermined first length F 1. The second semi-conducting tape layer 201 follows the curve of the second insulating tape layer 101. The semi-conducting tape layer 201 is brought into electrical contact with the outer semi-conductor layer 4 at the second position P2 and over a length from P2 to the edge E2. The semi-conducting tape layer 201 is electrically isolated from but overlapping the outer semi conductor layer 4 at the first position P1.

Figure 3 shows that the outside surface shape of the second 101 and the further insulation layer 102 has advantageous a plane and smooth surface for applying an insulator mantle 103, preferably an Epoxy insulator layer. After separating the outer semi-conductor layer 4 the insulator is pulled tight onto the outside surface of the insulation layers 101, 102. The insulator mantle 103 is arranged around the circumference of the cable 1 overlapping at least the longitudinal segment including the separation and is secured to the cable 1 preferably by soldering metallic flanges 104 to the metallic sheath 5 on each side of the insulator mantle 103. The metallic flanges 104 are also connected to the insulator mantle 103 preferably by molding or other mechanical connections.

Figure 4 shows a sectional view of another embodiment according to the invention where there is an extension Z of the outer semi-conducting layer. In this case, an insulation tape 100 layer is wrapped onto the surface of the exposed at least one mass impregnated insulation layer 3 from the first position P1 and along the second section L2 towards the second position P2. Further, a first semi-conducting tape layer 200 extends the semi-conducting tape at least from the first position P1 and towards and overlapping the first insulating tape layer 100 along the length Z.

A second insulating tape layer 101 is wrapped along a section of the second section L1 fully overlapping the first semi-conducting tape layer 200.

Further, a second semi-conducting tape layer 201 is wrapped onto the surface of the second insulating tape layer 101 at least from the second position P2 in the direction towards the first position P1 and overlapping the extended outer semi conductor layer at by a predetermined length in the section F1. The first semi-conducting tape layer 200 is in electrical contact with the outer semi-conductor layer 4 at the first position P1, and the second semi-conducting tape layer 201 is in electrical contact with the outer semi-conductor layer 4 at the second position P2, and the first 200 and second 201 semi-conducting tape layers are electrically isolated from each other but overlapping one another.

## Claims

1. A method of electrically separating longitudinal segments of at least one metallic sheath (5) and an outer semi-conductor layer (4) of a high voltage mass impregnated direct current, HVDC MI, cable (1), the HVDC MI cable (1) comprising, from the centre of the cable (1);
at least one conductor (2), at least one mass impregnated insulation layer (3), the outer semi-conductor layer (4) and the at least one metallic sheath (5), the method comprising the steps of;
- exposing a section (L1) of the outer semi-conducting layer (4) by removing the at least one metallic sheath (5) within said section,
- within the exposed section (L1) of the outer semiconductor layer (4), exposing a section (L2) of the at least one mass impregnated insulation layer (3) by removing the outer semiconductor layer (4) between a first and a second position (P1, P2),
- forming at least one insulation tape layer (100, 101) by wrapping a insulating tape onto the cable within at least part of the exposed section (L 1) of the outer semiconductor layer (4),
- forming at least one semi-conducting tape layer (200, 201) by wrapping a semi-conducting tape from at least one of the first and the second positions (P 1, P2) in a direction towards the opposite position (P1, P2) thereby extending the outer semi-conducting layer,
such that the semi-conducting tape layer (200, 201) in the longitudinal direction overlaps a section of the of the outer semiconductor layer (4) or an extension thereof thereby forming an overlap section (F1) and
such that within the overlap section (F1) the at least one semi-conducting tape layer (200, 201) is radially electrically separated from the exposed section of the of the outer semiconductor layer (4) or the extension thereof by the at least one insulation tape layer (100, 101),
- applying an insulator mantle (103) around the circumference of the cable at least spanning the exposed section (L1) of the outer semi-conducting layer (4),
- securing said insulator mantle (103) to the HVDC MI cable (1) by securing one metallic flange (104) to each side of the insulator mantle (103) and soldering (105) the metallic flanges to the metallic sheath (5),
- providing said metallic flanges (104) with electric connections,
wherein the method further comprises the step of providing at least one of said metallic flanges (104) with an impregnation fluid inlet, and providing impregnation fluid either pressurized or not pressurized into the HVDC MI cable (1) through said fluid inlet.

2. The method according to claim 1, wherein the method further comprises the step of wrapping a further insulating tape layer (102) onto any exposed surface of the outer semiconductor layer (4) or any extension thereof.

3. The method according to claim 1 or 2, wherein the tape of at least one semi-conducting tape layer (200, 201) is wrapped around a length of the exposed outer semi-conducting layer (4) to provide electrical contact with the outer semi-conductor layer (4) of said length.

4. The method according to any one of the claims 1 to 3, wherein the at least one insulation tape layer (100, 101), at least one semi-conducting tape layer (200, 201) and optionally the further insulating tape layer (102), are arranged within the volume of the removed sections of the at least one metallic sheath (5) and outer semi-conducting layer (4) and fills out said volume.

5. The method according to any one of claims 1-4, wherein the tape for the at least one insulation tape layer (100, 101), and optionally the further insulating tape layer (102) is an impregnated insulation paper and the tape for the at least one semi-conducting tape layer (200, 201) is an impregnated semi-conductive paper.

6. The method according to any one of claims 1-5, wherein the radial thickness of the insulation tape layer (100, 101) within the overlap section (F1) has adequate insulation thickness calculated to the maximum electrical stress of the semi-conducting tape layers (200, 201) and semi-conducting layer in the overlap section (F1).

7. A HVDC MI cable (1) comprising from the centre of the cable (1); at least one continuous conductor (2), at least one continuous mass impregnated insulation layer (3), an outer semi-conductor layer (4, 200, 201) with a longitudinal electrical separation and at least one metallic sheath (5) with a longitudinal electrical separation, where the electrical separations are arranged in a longitudinal segment of the cable,
wherein the HVDC MI cable (1) with said longitudinal electrical separations of the at least one metallic sheath (5) and the outer semi-conductor layer (4) has been formed according to the method according to claim 1.

8. Cable according to claim 7, wherein at least one of the separated ends of the outer semi-conductor layer (4) is extended by a semi-conducting tape layer to provide for the overlap in the longitudinal direction.

9. Cable according to claim 7 or 8, wherein the cable comprises at least one further insulation tape layer (102) providing the cable in the longitudinal segment with a diameter equal to the cable diameter of the cable outside of the longitudinal segment.

10. Cable according to claim 7, wherein the metallic flanges (104) are provided with electric connection units.

11. Cable according to any of claims 7 to10, wherein the insulation tape layer (100, 101, 102) is made of an impregnated insulation paper and the semi-conducting tape layer (200, 201) is made of an impregnated semi-conductive paper.

12. Cable according to any of claims 11, wherein the radial thickness of the at least one insulation tape layer radially separating the semi-conductor ends within the overlap (F1) is adequate insulation thickness calculated to the maximum electrical stress of the semi-conducting layers (4).

13. Cable according to claim 12, wherein the cable (1) maintains a continuous outer screen all along the cable (1) length during normal operation, and in the case of a fault-finding situation, any electrical current in the metallic sheath (5) can be measured separately on each side of the longitudinal segment.

## Patentansprüche

1. Verfahren zum elektrischen Trennen von Längssegmenten mindestens eines metallischen Mantels (5) und einer äußeren Halbleiterschicht (4) eines masseimprägnierten Hochspannungs-Gleichstromkabels (1), das HVDC-MI-Kabel (1) umfassend von der Mitte des Kabels (1);
mindestens einen Leiter (2), mindestens eine masseimprägnierte Isolierschicht (3), die äußere Halbleiterschicht (4) und den mindestens einen metallischen Mantel (5), das Verfahren umfassend die folgenden Schritte;
- Freilegen eines Abschnitts (L1) der äußeren Halbleiterschicht (4) durch Entfernen des mindestens einen metallischen Mantels (5) innerhalb dieses Abschnitts,
- innerhalb des freigelegten Abschnitts (L1) der äußeren Halbleiterschicht (4), Freilegen eines Abschnitts (L2) der mindestens einen masseimprägnierten Isolierschicht (3) durch Entfernen der äußeren Halbleiterschicht (4) zwischen einer ersten und einer zweiten Position (P1, P2),
- Bilden mindestens einer Isolierbandschicht (100, 101) durch Wickeln eines Isolierbands auf das Kabel innerhalb mindestens eines Teils des freigelegten Abschnitts (L1) der äußeren Halbleiterschicht (4),
- Bilden mindestens einer halbleitenden Bandschicht (200, 201) durch Wickeln eines halbleitenden Bandes von mindestens einer von der ersten und der zweiten Position (P1, P2) in eine Richtung zu der gegenüberliegenden Position (P1, P2), wodurch die äußere halbleitende Schicht verlängert wird,
sodass die halbleitende Bandschicht (200, 201) in der Längsrichtung einen Abschnitt der äußeren Halbleiterschicht (4) oder eine Verlängerung davon überlappt, wodurch ein Überlappungsabschnitt (F1) gebildet wird, und
sodass innerhalb des Überlappungsabschnitts (F1) die mindestens eine halbleitende Bandschicht (200, 201) radial elektrisch von dem freigelegten Abschnitt der äußeren Halbleiterschicht (4) oder deren Verlängerung durch die mindestens eine Isolierbandschicht (100, 101) getrennt ist,
- Aufbringen einer Isolierhülle (103) um den Umfang des Kabels, der mindestens den freigelegten Abschnitt (L1) der äußeren Halbleiterschicht (4) überspannt,
- Befestigen der Isolierhülle (103) an dem HVDC-MI-Kabel (1) durch Befestigen eines metallischen Flanschs (104) auf jeder Seite der Isolierhülle (103) und Löten (105) der metallischen Flansche an den metallischen Mantel (5),
- Versehen der metallischen Flansche (104) mit elektrischen Anschlüssen,
das Verfahren ferner umfassend den Schritt eines Versehens von mindestens einem der metallischen Flansche (104) mit einem Imprägnierfluideinlass und eines Bereitstellens von Imprägnierfluid entweder unter Druck oder nicht unter Druck in das HVDC-MI-Kabel (1) durch den Fluideinlass.

2. Verfahren nach Anspruch 1, wobei das Verfahren ferner den Schritt eines Wickelns einer weiteren Isolierbandschicht (102) auf eine beliebige freigelegte Oberfläche der äußeren Halbleiterschicht (4) oder eine beliebige Verlängerung davon umfasst.

3. Verfahren nach Anspruch 1 oder 2, wobei das Band aus mindestens einer halbleitenden Bandschicht (200, 201) um eine Länge der freigelegten äußeren halbleitenden Schicht (4) gewickelt wird, um einen elektrischen Kontakt mit der äußeren halbleitenden Schicht (4) der genannten Länge bereitzustellen.

4. Verfahren nach einem der Ansprüche 1 bis 3, wobei die mindestens eine Isolierbandschicht (100, 101), die mindestens eine halbleitende Bandschicht (200, 201) und optional die weitere Isolierbandschicht (102) innerhalb des Volumens der entfernten Abschnitte des mindestens einen metallischen Mantels (5) und äußeren halbleitenden Schicht (4) angeordnet werden und dieses Volumen ausfüllen.

5. Verfahren nach einem der Ansprüche 1-4, wobei das Band für die mindestens eine Isolierbandschicht (100, 101) und optional die weitere Isolierbandschicht (102) ein imprägniertes Isolierpapier und das Band für die mindestens eine halbleitende Bandschicht (200, 201) ein imprägniertes Halbleiterpapier ist.

6. Verfahren nach einem der Ansprüche 1-5, wobei die radiale Stärke der Isolierbandschicht (100, 101) innerhalb des Überlappungsabschnitts (F1) eine ausreichende Isolierstärke aufweist, die für die maximale elektrische Spannung der halbleitenden Bandschichten (200, 201) und der halbleitenden Schicht in dem Überlappungsabschnitt (F1) berechnet ist.

7. HVDC-MI-Kabel (1), umfassend von der Mitte des Kabels (1); mindestens einen durchgehenden Leiter (2), mindestens eine durchgehende masseimprägnierte Isolierschicht (3), eine äußere Halbleiterschicht (4, 200, 201) mit einer elektrischen Längstrennung und mindestens einen metallischen Mantel (5) mit einer elektrischen Längstrennung, wobei die elektrischen Trennungen in einem Längssegment des Kabels angeordnet sind, wobei das HVDC-MI-Kabel (1) mit den elektrischen Längstrennungen des mindestens einen metallischen Mantels (5) und der äußeren Halbleiterschicht (4) gemäß dem Verfahren nach Anspruch 1 gebildet worden ist.

8. Kabel nach Anspruch 7, wobei mindestens eines der separaten Enden der äußeren Halbleiterschicht (4) durch eine halbleitende Bandschicht verlängert ist, um die Überlappung in Längsrichtung bereitzustellen.

9. Kabel nach Anspruch 7 oder 8, wobei das Kabel mindestens eine weitere Isolierbandschicht (102) aufweist, die das Kabel in dem Längsabschnitt mit einem Durchmesser versieht, der dem Kabeldurchmesser des Kabels außerhalb des Längsabschnitts entspricht.

10. Kabel nach Anspruch 7, wobei die metallischen Flansche (104) mit elektrischen Verbindungseinheiten versehen sind.

11. Kabel nach einem der Ansprüche 7 bis 10, wobei die Isolierbandschicht (100, 101, 102) aus einem imprägnierten Isolierpapier und die halbleitende Bandschicht (200, 201) aus einem imprägnierten Halbleiterpapier hergestellt ist.

12. Kabel nach einem der Ansprüche 11, wobei die radiale Stärke der mindestens einen Isolierbandschicht, die die Halbleiterenden innerhalb der Überlappung (F1) radial trennt, eine ausreichende Isolierstärke ist, die für die maximale elektrische Spannung der halbleitenden Schichten (4) berechnet ist.

13. Kabel nach Anspruch 12, wobei das Kabel (1) im Normalbetrieb eine durchgehende äußere Abschirmung über die gesamte Länge des Kabels (1) beibehält und im Fall einer Fehlersuche jeglicher elektrischer Strom in dem metallischen Mantel (5) auf jeder Seite des Längssegments separat gemessen werden kann.

## Revendications

1. Procédé de séparation électrique de segments longitudinaux d'au moins une gaine métallique (5) et d'une couche semi-conductrice externe (4) d'un câble à courant continu imprégné de masse à haute tension, HVDC MI (1), le câble HVDC MI (1) comprenant, en partant du centre du câble (1) ; au moins un conducteur (2), au moins une couche isolante imprégnée de masse (3), la couche semi-conductrice externe (4) et l'au moins une gaine métallique (5), le procédé comprenant les étapes suivantes :
- exposition d'une section (L1) de la couche semi-conductrice externe (4) en retirant l'au moins une gaine métallique (5) au sein de ladite section,
- au sein de la section exposée (L1) de la couche semi-conductrice externe (4), l'exposition d'une section (L2) de l'au moins une couche isolante imprégnée de masse (3) en retirant la couche semi-conductrice externe (4) entre une première et une deuxième position (P1, P2),
- la formation d'au moins une couche de ruban isolant (100, 101) en enroulant un ruban isolant sur le câble au sein d'au moins une partie de la section exposée (L1) de la couche semi-conductrice externe (4),
- la formation d'au moins une couche de ruban semi-conducteur (200, 201) en enroulant un ruban semi-conducteur à partir d'au moins l'une des première et deuxième positions (P1, P2) dans une direction vers la position (P1, P2) opposée, prolongeant ainsi la couche semi-conductrice externe,
de telle sorte que la couche de ruban semi-conducteur (200, 201) dans la direction longitudinale chevauche une section de la couche semi-conductrice externe (4) ou un prolongement de celle-ci formant ainsi une section de chevauchement (F1) et
de telle sorte qu'au sein de la section de chevauchement (F1), l'au moins une couche de ruban semi-conducteur (200, 201) est radialement séparée électriquement de la section exposée de la couche semi-conductrice externe (4) ou du prolongement de celle-ci par l'au moins une couche de ruban isolant (100, 101),
- l'application d'un manteau isolant (103) autour de la circonférence du câble recouvrant au moins la section exposée (L1) de la couche semi-conductrice externe (4),
- la fixation dudit manteau isolant (103) sur le câble HVDC MI (1) en fixant une bride métallique (104) sur chaque côté dudit manteau isolant (103) et en soudant (105) les brides métalliques à la gaine métallique (5),
- la fourniture desdites brides métalliques (104) avec des connexions électriques,
dans lequel le procédé comprend en outre l'étape de fourniture d'au moins l'une desdites brides métalliques (104) avec une entrée de fluide d'imprégnation, et la fourniture de fluide d'imprégnation pressurisé ou non pressurisé dans le câble HVDC MI (1) à travers ladite entrée de fluide.

2. Procédé selon la revendication 1, dans lequel le procédé comprend en outre l'étape d'enroulement d'une autre couche de ruban isolant (102) sur une quelconque surface exposée de la couche semi-conductrice externe (4) ou sur un quelconque prolongement de celle-ci.

3. Procédé selon la revendication 1 ou 2, dans lequel le ruban de l'au moins une couche de ruban semi-conducteur (200, 201) est enroulée autour d'une longueur de la couche semi-conductrice exposée (4) pour établir un contact électrique avec la couche semi-conductrice externe (4) de ladite longueur.

4. Procédé selon l'une quelconque des revendications 1 à 3, dans lequel l'au moins une couche de ruban isolant (100, 101), l'au moins une couche de ruban semi-conducteur (200, 201) et éventuellement l'autre couche de ruban isolant (102), sont agencées au sein du volume des sections retirées de l'au moins une gaine métallique (5) et de la couche semi-conductrice externe (4) et remplissent ledit volume.

5. Procédé selon l'une quelconque des revendications 1 à 4, dans lequel le ruban pour l'au moins une couche de ruban isolant (100, 101), et éventuellement l'autre couche de ruban isolant (102) est un papier isolant imprégné et le ruban pour l'au moins une couche de ruban semi-conducteur (200, 201) est un papier semi-conducteur imprégné.

6. Procédé selon l'une quelconque des revendications 1 à 5, dans lequel l'épaisseur radiale de la couche de ruban isolant (100, 101) au sein de la section de chevauchement (F1) a une épaisseur d'isolation adéquate calculée à la tension électrique maximale des couches de ruban semi-conducteur (200, 201) et de la couche semi-conductrice dans la section de chevauchement (F1).

7. Câble HVDC MI (1) comprenant en partant du centre du câble (1) ; au moins un conducteur continu (2), au moins une couche isolante imprégnée de masse continue (3), une couche semi-conductrice externe (4, 200, 201) avec une séparation électrique longitudinale et au moins une gaine métallique (5) avec une séparation électrique longitudinale, où les séparations électriques sont agencées dans un segment longitudinal du câble,
dans lequel le câble HVDC MI (1) avec lesdites séparations électriques longitudinales de l'au moins une gaine métallique (5) et la couche semi-conductrice externe (4), a été formé selon le procédé selon la revendication 1.

8. Câble selon la revendication 7, dans lequel au moins une des extrémités séparées de la couche semi-conductrice externe (4) est prolongée par une couche de ruban semi-conducteur pour assurer le chevauchement dans la direction longitudinale.

9. Câble selon la revendication 7 ou 8, dans lequel le câble comprend au moins une autre couche de ruban isolant (102) fournissant au câble dans le segment longitudinal un diamètre égal au diamètre de câble du câble à l'extérieur du segment longitudinal.

10. Câble selon la revendication 7, dans lequel les brides métalliques (104) sont pourvues d'unité de connexion électriques.

11. Câble selon l'une quelconque des revendications 7 à 10, dans lequel la couche de ruban isolant (100, 101, 102) est constituée d'un papier isolant imprégné et la couche de ruban semi-conducteur (200, 201) est constituée d'un papier semi-conducteur imprégné.

12. Câble selon la revendication 11, dans lequel l'épaisseur radiale de l'au moins une couche de ruban isolant séparant radialement les extrémités semi-conductrices au sein du chevauchement (F1) est une épaisseur d'isolation adéquate calculée selon la contrainte électrique maximale des couches semi-conductrices (4).

13. Câble selon la revendication 12, dans lequel le câble (1) maintient un écran externe continu sur toute la longueur du câble (1) en fonctionnement normal, et en cas de situation de recherche de panne, tout courant électrique dans la gaine métallique (5) peut être mesuré séparément de chaque côté du segment longitudinal.
